# FASCICULE DE BREVET EUROPEEN

(11) **EP 1 726 836 B1**
(45) Date de publication et mention de la délivrance du brevet: **05.08.2009**
(21) Numéro de dépôt: 05104570.6
(22) Date de dépôt: 27.05.2005
(51) Int. Cl.: F16C 11/06

(54) **Procédé de fabrication d'un palier à rotule**
Herstellungsverfahren eines Kugelgelenks
Manufacturing method of a ball joint

(43) Date de publication de la demande: 29.11.2006
(73) Titulaire: Jesa SA, 1752 Villars sur Glane (CH)
(72) Inventeur: Buergisser, Bruno, 1715 Alterswil FR (CH); Berset, Jean-Baptiste, 1645 Le Bry (CH)
(74) Mandataire: Scheuzger, Beat Otto

(56) Documents cités:
- EP-A- 0 955 480
- FR-A- 1 488 842
- US-A- 2 365 552
- US-A- 5 328 273
- US-A- 5 641 235
- US-A1- 2003 072 609

## Description

L'invention se rapporte à un procédé de fabrication d'un palier à rotule.

Les dispositifs dits "paliers à rotule" ou plus simplement "rotules" sont des dispositifs qui sont utilisés pour assurer un guidage en rotation autour d'un axe de rotation prédéterminé avec la possibilité de supporter des basculements ou des oscillations de cet axe.

Les dispositifs de ce type peuvent supporter de grandes charges dynamiques et de très importantes charges statiques.

Les dispositifs de ce type comprennent généralement deux éléments principaux dont :
- un premier élément qui, de forme partiellement sphérique et désigné par le terme de "sphère", présente au moins deux surfaces fonctionnelles dont,
- une surface externe, dite première surface, définissant un anneau sphérique délimité entre deux faces opposées sensiblement orthogonales à l'axe de l'anneau,
- une surface interne, dite deuxième surface, définissant entre les deux faces opposées une perforation cylindrique dans le premier élément, notamment, dont l'axe longitudinal est confondu avec celui de l'anneau sphérique défini par la première surface et qui est sécant au centre géométrique de la première surface,
- un deuxième élément qui, de forme annulaire et désigné par le terme de "cage", présente au moins deux surfaces fonctionnelles dont,
- une surface externe, dite troisième surface, sensiblement cylindrique de révolution, destinée à permettre une liaison mécanique avec un organe de support du palier,
- une surface interne, dite quatrième surface, destinée à coopérer avec la première surface dudit premier élément.

un jeu radial d'une première valeur prédéterminée est prévu entre les dites première surface et quatrième surface.

La sphère et la cage sont donc montées avec un certain jeu radial qui est garant du bon fonctionnement du dispositif.

La valeur intrinsèque du jeu radial de fonctionnement présenté par un palier à rotule neuf et le fait que ce jeu de fonctionnement soit préservé dans le temps, sont des critères qui relèvent de la qualité dudit palier à rotule.

L'ajustement de la dite valeur intrinsèque du jeu radial lors de la fabrication du palier à rotule et la recherche des solutions techniques qui vont permettre de préserver ce jeu dans le temps représentent la principale difficulté de fabrication de ce type de dispositif.

Un procédé connu de l'état de la technique US-A-5328273 permet d'obtenir un jeu de fonctionnement prédéterminé par utilisation, lors de l'opération de moulage de la cage, d'une entretoise provisoire qui disposée contre la rotule est supprimée après moulage.

Des procédés connus de l'état de la technique permettent d'ajuster le jeu de fonctionnement par déformation plastique de la cage (état de l'art cité dans US-A-5328273) ou EP-A-0955480 d'un élément inteposé entre la cage et la rotule.

Ces techniques ont leurs avantages, mais exigent une opération de suppression de l'entretoise ou de réglage par déformation plastique.

Un résultat que l'invention vise à obtenir est un procédé de fabrication d'un palier à rotule qui permette de garantir :
- l'obtention d'un jeu radial d'une valeur déterminée, et
- le maintien dans le temps de cette valeur de jeu radial.

A cet effet, l'invention a pour objet un procédé du type précité, caractérisé selon la revendication 1.

L'invention sera bien comprise à la lecture de la description ci-après faite à titre d'exemple non limitatif en regard du dessin ci-annexé qui représente :

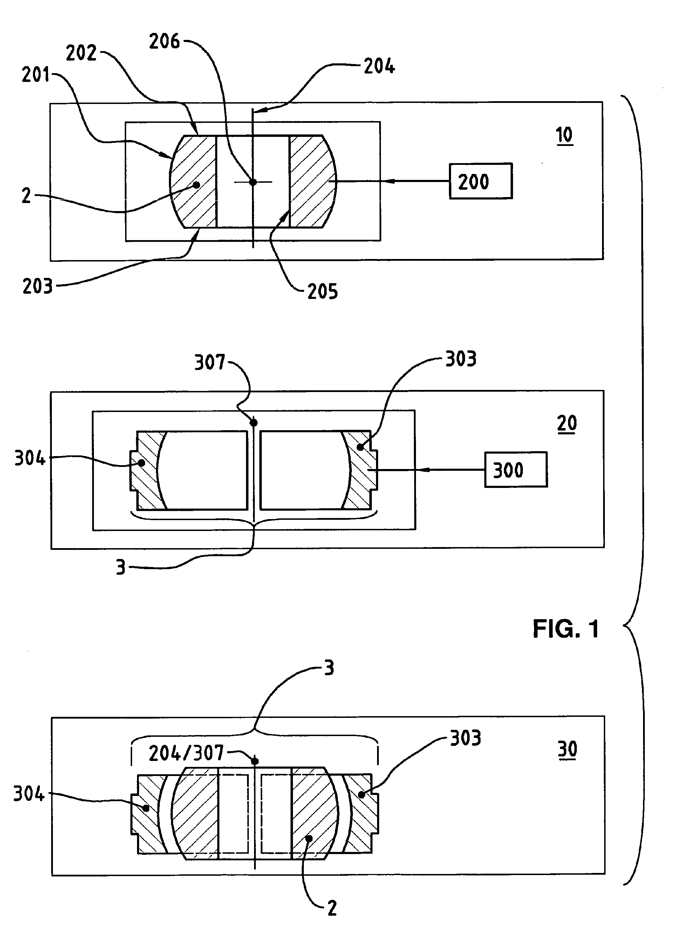

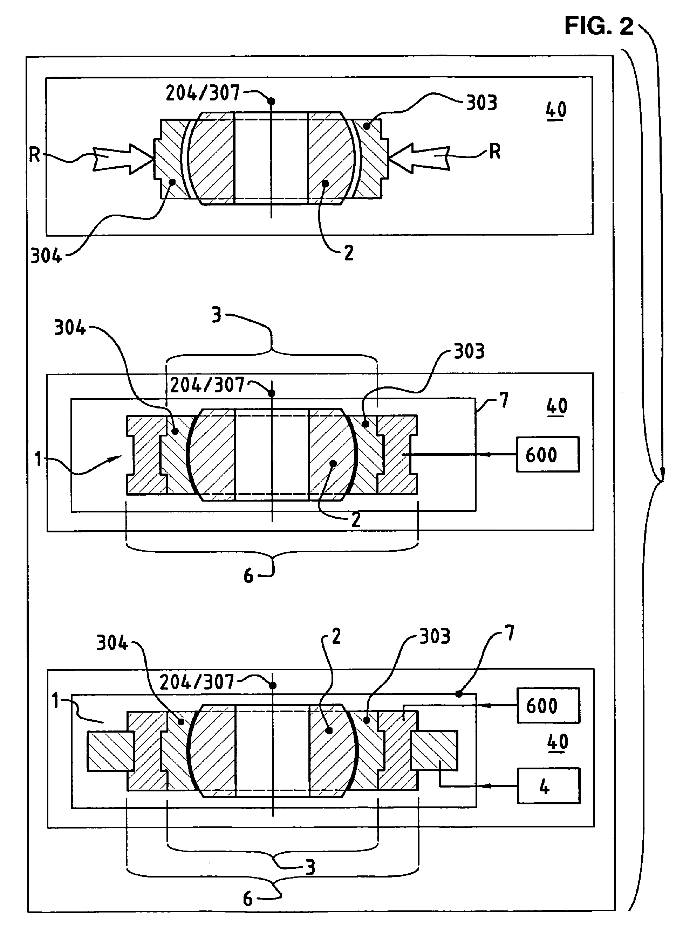

- figures 1 et 2 : deux groupes de schémas montrant différentes phases de la fabrication d'un palier à rotule représenté en coupe transversale,

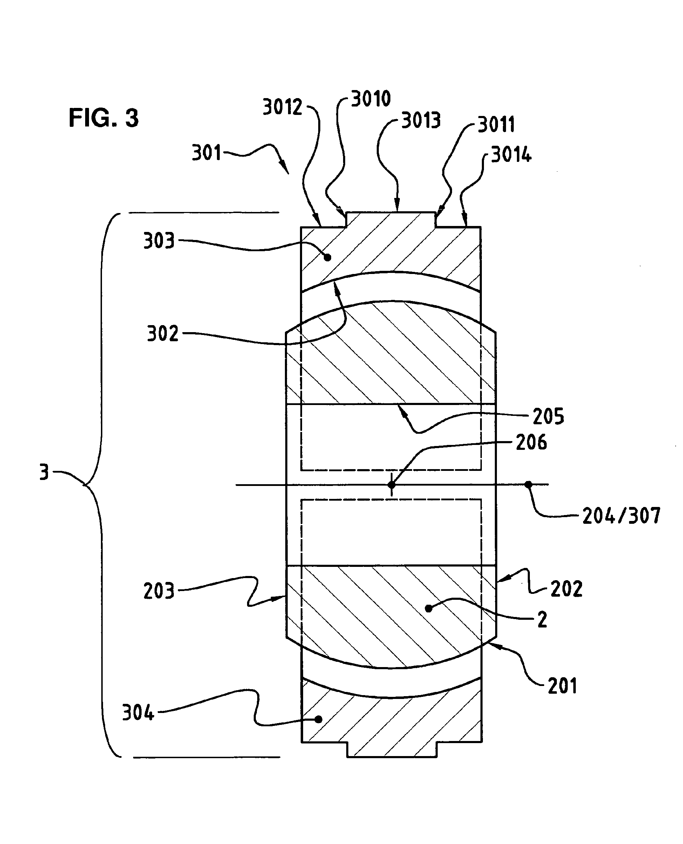

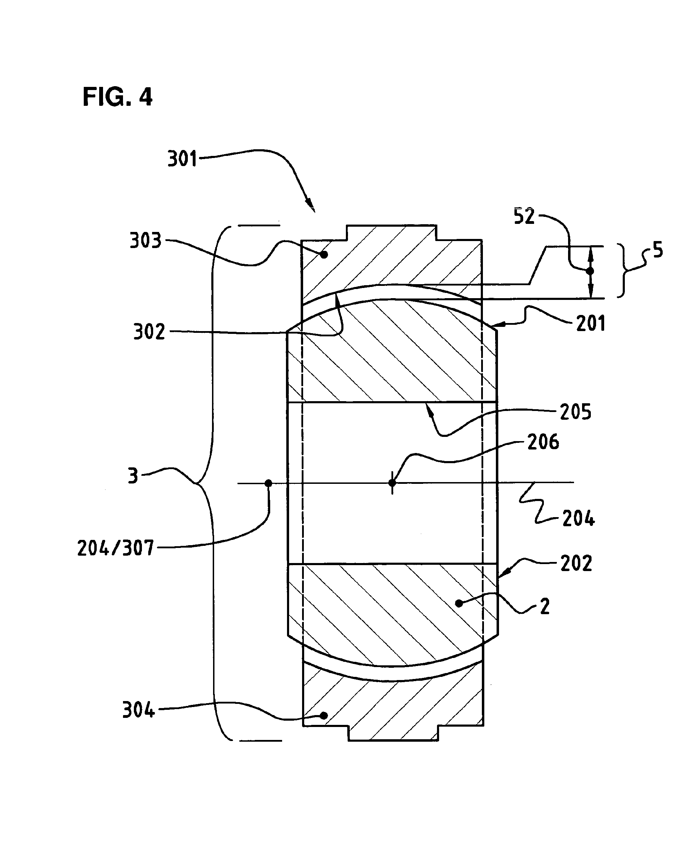

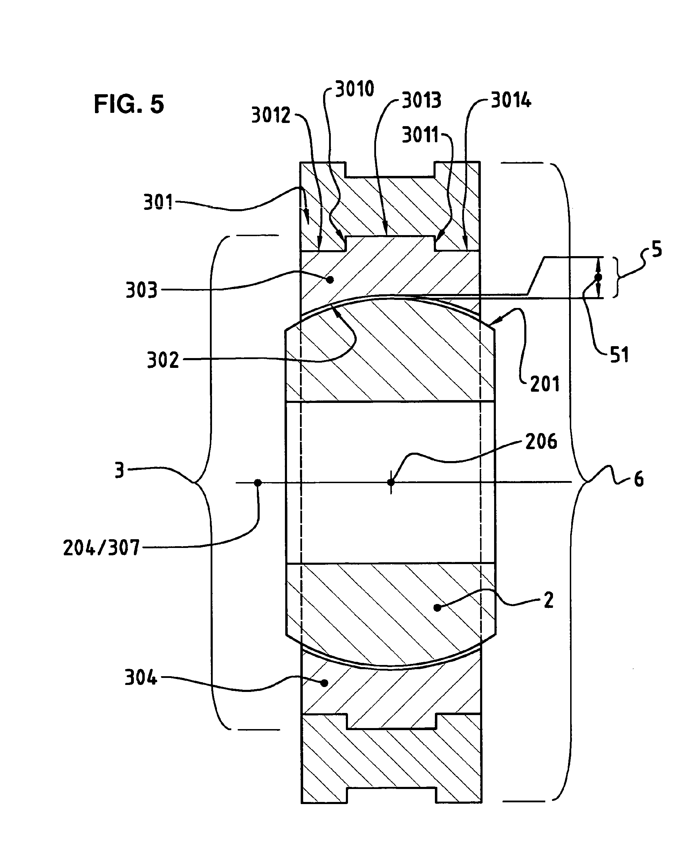

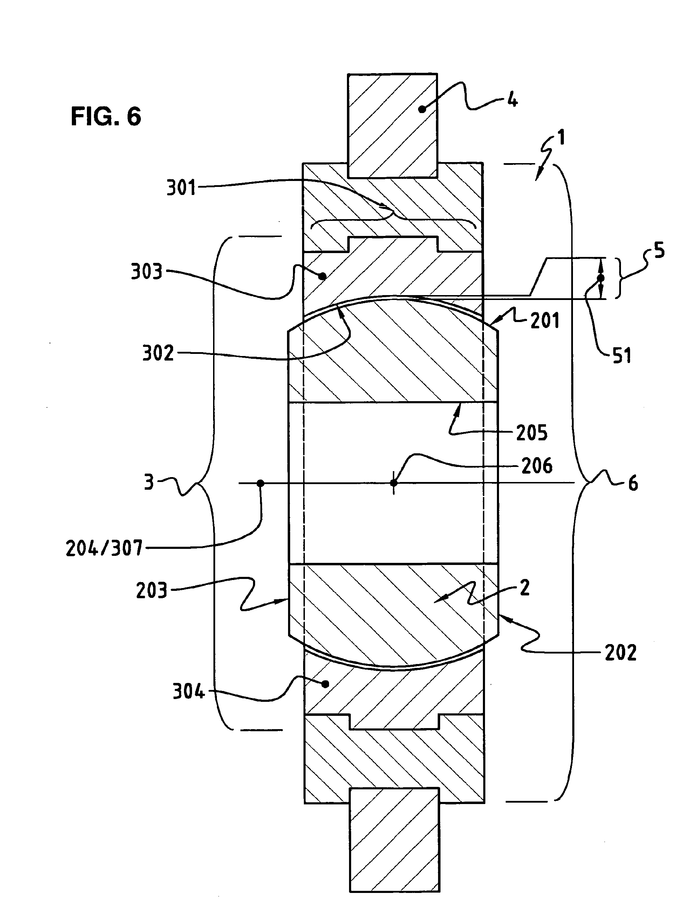

- figures 3 à 6 : à plus grande échelle et en coupe transversale, le palier fabriqué selon l'invention au cours de différentes phases de sa fabrication,
- figure 7 : une vue latérale d'un palier fabriqué selon l'invention monté sur un organe support,
- figure 8 : une vue en coupe transversale du palier de la figure 7.
   En ce reportant au dessin, on voit un palier 1 de type dit à rotule comprenant
- un premier élément 2 qui, de forme partiellement sphérique et désigné par le terme de "sphère", présente au moins deux surfaces fonctionnelles 201, 202 dont,
- une surface externe, dite première surface 201, définissant un anneau sphérique délimité entre deux faces opposées 202, 203 sensiblement orthogonales à l'axe 204 de l'anneau,
- une surface interne, dite deuxième surface 205, définissant entre les deux faces opposés 202, 203, une perforation cylindrique 205 dans le premier élément 2, notamment, dont l'axe longitudinal est confondu avec celui de l'anneau sphérique défini par la première surface 201 et qui est sécant au centre géométrique 206 de la première surface 201,
- un deuxième élément 3 qui, de forme annulaire et désigné par le terme de "cage", présente au moins deux surfaces fonctionnelles 301, 302 dont,
- une surface externe, dite troisième surface 301, sensiblement cylindrique de révolution, destinée à permettre une liaison mécanique avec un organe 4 de support du palier 1,
- une surface interne, dite quatrième surface 302, destinée à coopérer avec la première surface 201 dudit premier élément 2, un jeu radial 5 d'une première valeur prédéterminée 51 étant prévue entre les dites première surface 201 et quatrième surface 302.

A titre d'exemple non limitatif, l'organe 4 de support du palier consiste en une bielle (non représentée) à l'une des extrémités de laquelle ledit palier 1 doit être porté pour assurer le guidage d'un arbre (non représenté) qui traverse la sphère 2 par la perforation cylindrique 205.

De manière notable, pour fabriquer le palier 1, après avoir constitué le premier élément 2 dit "sphère" :
- au cours d'une première phase 20, on constitue le deuxième élément 3 dit "cage" par moulage d'un premier matériau 300, et ce, au moins en deux parties assemblables 303, 304, 305, 306 selon au moins un plan de joint 307, 308 choisi pour autoriser le positionnement des dites parties sur la sphère 2, et ce, avec un jeu radial 5 d'une deuxième valeur 52 prédéterminée,
- au cours d'une deuxième phase 30, on assemble les différentes parties 303, 304, 305, 306 de la cage 3 sur la sphère 2 de manière telle qu'elles soient en position de fonctionnement et, après assemblage,
- au cours d'une troisième phase 40, on constitue autour des différentes parties 303, 304, 305, 306 de la cage 3 un troisième élément 6, désigné par le terme de cerclage, pour maintenir lesdites différentes parties 303, 304, 305, 306 en exerçant sur ces dernières des actions radiales "R" orientées vers le centre géométrique 206 de la sphère 2, et, on ajuste l'intensité de ces actions radiales "R" de manière à, par déformation de la cage, modifier le jeu radial 5 et ajuster ce jeu pour le faire passer de la deuxième valeur 52 prédéterminée à la première valeur 51 prédéterminée.

Outre qu'elle permet le choix de la valeur du jeu radial 5, cette manière de procéder permet de garantir la fabrication d'une pluralité de paliers 1 ayant un même jeu radial 5 de fonctionnement.

Selon une première forme non limitative de réalisation, la cage 3 est constituée en deux parties 303, 304 symétriques assemblables selon un premier plan de joint 307 qui contient l'axe longitudinal 204 de l'anneau sphérique qui constitue la sphère 3.

Selon cette première forme de réalisation, au cours de la première phase 20 du procédé, on constitue le deuxième élément 3 dit "cage" par moulage, en deux parties 303, 304 symétriques assemblables selon un premier plan de joint 307 qui contient l'axe longitudinal 204 de l'anneau sphérique qui constitue la sphère 3.

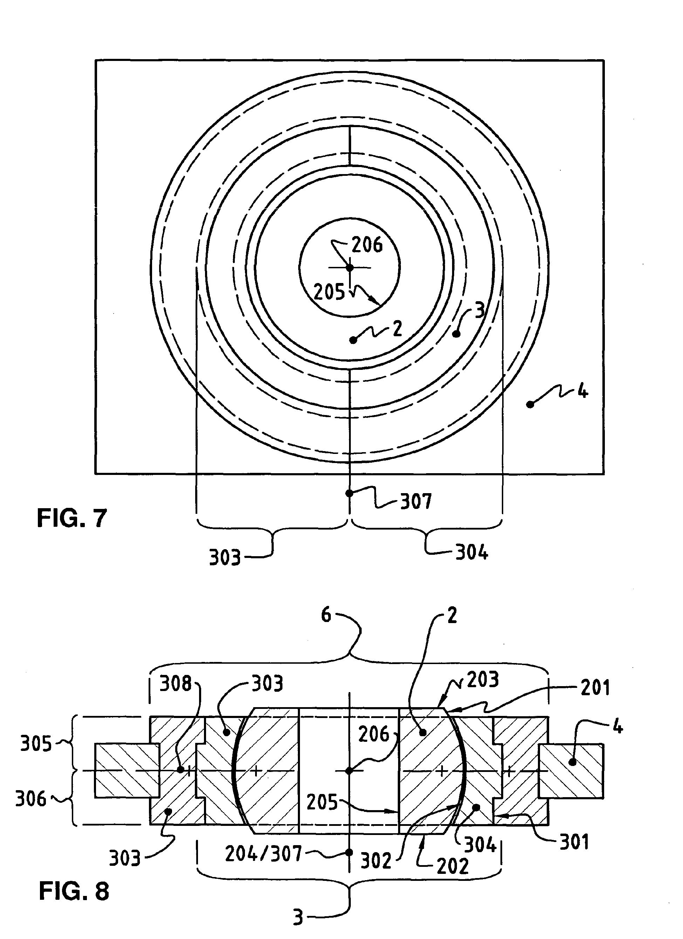

Suivant une deuxième forme non limitative de réalisation, la cage 3 est constituée en deux parties 305, 306 symétriques assemblables selon un deuxième plan de joint 308 qui est orthogonal à l'axe longitudinal 204 de l'anneau sphérique qui constitue la sphère 3 (cette solution n'est pas exactement représentée, mais la position du plan de joint correspondant 308 est représentée en figure 8 et les parties 305, 306 assemblables selon ce plan de joint 308 sont annoncées).

Suivant cette deuxième forme de réalisation, au cours de la première phase 20 du procédé, on constitue le deuxième élément 3 dit "cage" par moulage, en deux parties 305, 306 symétriques assemblables selon un deuxième plan de joint 308 qui est orthogonal à l'axe longitudinal 204 de l'anneau sphérique qui constitue la sphère 3.

De préférence, mais non limitativement, l'élément de cerclage 6 a, dans la direction de l'axe longitudinal 206 de la perforation cylindrique 205 de la sphère 2, une même dimension ou épaisseur que la dite sphère 2.

Quoi qu'il en soit, lorsqu'on constitue les différentes parties 303, 304, 305, 306 de la cage 3, on prévoit sur ces différentes parties 303, 304, 305, 306 des faces 3010, 3011, 3012, 3013, dites faces réceptrices 3010, 3011, 3012, 3013, qui vont donc constituer la surface externe, dite troisième surface 301, destinée à permettre une liaison mécanique avec un organe 4 de support du palier 1, et sur lesquelles faces réceptrices 3010, 3011, 3012, 3013, les actions radiales "R" de l'élément de cerclage 6 peuvent s'exercer, ces faces réceptrices 3010, 3011, 3012, 3013, 3014 étant disposées et orientées de manière telle que lesdites actions radiales "R" :
- provoquent la déformation recherchée de la cage 3 pour ajuster le jeu radial 5,
- maintiennent entre elles les différentes parties 303, 304, 305, 306 de la cage 3 et immobilisent ces différentes parties par rapport au dit élément de cerclage 6 lui-même.

L'homme du métier est à même de définir les meilleures formes, dimensions et positions de ces faces réceptrices, mais, par exemple lesdites faces réceptrices 3010, 3011, 3012, 3013 consistent en :
- au moins une face annulaire 3010, 3011 qui est située dans un plan orthogonal à l'axe longitudinal 206 de la perforation cylindrique 205 de la sphère 2,
- au moins une face cylindrique 3012, 3013, 3014.

Avantageusement, les faces réceptrices 3010, 3011, 3012, 3013 consistent en :
- deux faces annulaires 3010, 3011 qui sont opposées,
- trois faces cylindriques 3012, 3013, 3014, dont deux faces réceptrices 3012, 3014 de moindres diamètres qui bordent une face réceptrice 3013 de plus fort diamètre, les faces annulaires 3010, 3011 étant situées à la jonction des dites faces cylindriques.

L'homme du métier est également à même de prévoir sur les différentes parties 303, 304, 305, 306 de la cage 3, notamment au niveau de surfaces situées dans le premier (307) ou le deuxième (308) plan de joint, des organes complémentaires coopérant par emboitement (non représentés) qui engendrent un prépositionnement relatif desdites différentes parties 303, 304, 305, 306 de la cage 3 entre elles afin de garantir le positionnement adéquate de ces parties avant la constitution de l'élément de cerclage 6.

De manière encore remarquable, pour constituer le troisième élément dit élément de cerclage 6 :
- on choisit un deuxième matériau 600 de type moulable par injection, puis
- au moins par essai, on détermine le coefficient de retrait 601 dudit deuxième matériau 600, puis
- en fonction dudit coefficient de retrait 601, au moins par essai, on détermine la deuxième valeur 52 de jeu radial 5 de manière telle qu'après moulage de l'élément de cerclage 6, ce dernier applique à la cage 3 des actions radiales qui la déforment de manière contrôlée et qui, en modifiant le jeu radial 5, règlent ainsi le jeu radial 5 sur la première valeur 51 prédéterminée, puis
- on constitue un moule 7 définissant une cavité autour de celles des parties 303, 304, 305, 306 dont la cage 3 doit être constituée, et après avoir positionné dans le moule 7 un ensemble constitué par une sphère 2 et une cage 3, puis
- on constitue l'élément de cerclage 6 par moulage dudit deuxième matériau 600 autour des différentes parties 303, 304, 305, 306 de la cage 3 afin de maintenir élastiquement lesdites différentes parties 303, 304, 305, 306 de la cage 3 et, lors de la solidification du deuxième matériau 600, du fait du retrait du deuxième matériau 600 d'imposer à ces parties de la cage 3 les contraintes radiales qui vont permettre d'ajuster le jeu radial 5 sur la première valeur 51.

Par deuxième matériau 600 de type moulable par injection, on désigne un matériau qui peut se présenter au moins à l'état pâteux, mais de préférence à l'état liquide, et peut se solidifier, par exemple, par réaction chimique ou par réaction physique.

De manière encore remarquable, lors de la constitution de l'élément de cerclage 6 par moulage :
- on injecte ledit deuxième matériau 600 dans le moule 7 avec une pression d'une valeur prédéterminée, au moins par essai, et,
- on maintient cette pression pendant un temps également prédéterminé, au moins par essai, et ce, de manière à précontraindre le deuxième matériau 600 injecté et générer sur les différentes parties 303, 304, 305, 306 de la cage 3 des contraintes radiales qui vont s'additionner aux contraintes engendrées par le retrait dudit deuxième matériau 600.

Cette technique permet d'influencer l'action du retrait du deuxième matériau 600.

De manière remarquable, lors de la constitution de l'élément de cerclage 6 par moulage, on utilise le deuxième matériau 600 injecté dans le moule 7 pour assurer une liaison mécanique entre le palier 1 et un organe 4 de support du palier 1 que l'on a préalablement positionné dans le moule 7.

Dans une forme préférée de réalisation, lors d'une phase préparatoire 10, on constitue la sphère 2 dans un troisième matériau 200 consistant en du métal et on choisit comme premier matériau 300 un polymère.

## Revendications

1. Procédé de fabrication d'un palier (1) de type dit à rotule ayant notamment,
- un premier élément (2) qui, de forme partiellement sphérique et désigné par le terme de "sphère", présente au moins deux surfaces fonctionnelles (201, 202) dont,
- une surface externe, dite première surface (201), définissant un anneau sphérique délimité entre deux faces opposées (202, 203) sensiblement orthogonales à l'axe (204) de l'anneau,
- un deuxième élément (3) qui, de forme annulaire et désigné par le terme de "cage", présente au moins deux surfaces fonctionnelles (301, 302) dont,
- une surface externe, dite troisième surface (301), sensiblement cylindrique de révolution, destinée à permettre une liaison mécanique avec un organe (4) de support du palier (1),
- une surface interne, dite quatrième surface (302), destinée à coopérer avec la première surface (201) dudit premier élément (2), un jeu radial (5) d'une première valeur prédéterminée (51) étant prévu entre les dites première surface (201) et quatrième surface (302),
selon ce procédé, pour fabriquer le palier (1), après avoir constitué le premier élément (2) dit "sphère" :
- au cours d'une première phase (20), on constitue le deuxième élément (3) dit "cage" par moulage d'un premier matériau (300), et ce, au moins en deux parties assemblables (303, 304, 305, 306) selon au moins un plan de joint (307, 308) choisi pour autoriser le positionnement des dites parties sur la sphère (2), et ce, avec un jeu radial (5) d'une deuxième valeur (52) prédéterminée,
- au cours d'une deuxième phase (30), on assemble les différentes parties (303, 304, 305, 306) de la cage (3) sur la sphère (2) de manière telle qu'elles soient en position de fonctionnement et, après assemblage,
- au cours d'une troisième phase (40), on constitue autour des différentes parties (303, 304, 305, 306) de la cage (3) un troisième élément (6), désigné par le terme de cerclage, pour maintenir lesdites différentes parties (303, 304, 305, 306) en exerçant sur ces dernières des actions radiales ("R") orientées vers le centre géométrique (206) de la sphère (2), et, on ajuste l'intensité de ces actions radiales ("R") de manière à, par déformation de la cage, modifier le jeu radial (5) et ajuster ce jeu pour le faire passer de la deuxième valeur (52) prédéterminée à la première valeur (51) prédéterminée,
ce procédé étant **caractérisé en ce que** pour constituer le troisième élément dit élément de cerclage (6) :
- on choisit un deuxième matériau (600) de type moulable par injection, puis
- au moins par essai, on détermine le coefficient de retrait (601) dudit deuxième matériau (600), puis
- en fonction dudit coefficient de retrait (601), au moins par essai, on détermine la deuxième valeur (52) de jeu radial (5) de manière telle qu'après moulage de l'élément de cerclage (6), ce dernier applique à la cage (3) des actions radiales qui la déforment de manière contrôlée et qui, en modifiant le jeu radial (5), règlent ainsi le jeu radial (5) sur la première valeur (51) prédéterminée, puis
- on constitue un moule (7) définissant une cavité autour de celles des parties (303, 304, 305, 306) dont la cage (3) doit être constituée, et après avoir positionné dans le moule (7) un ensemble constitué par une sphère (2) et une cage (3), puis
- on constitue l'élément de cerclage (6) par moulage dudit deuxième matériau (600) autour des différentes parties (303, 304, 305, 306) de la cage (3) afin de maintenir élastiquement lesdites différentes parties (303, 304, 305, 306) de la cage (3) et, lors de la solidification du deuxième matériau (600), du fait du retrait du deuxième matériau (600) d'imposer à ces parties de la cage (3) les contraintes radiales qui vont permettre d'ajuster le jeu radial (5) sur la première valeur (51).

2. Procédé selon la revendication 1, **caractérisé en ce que** lors de la constitution de l'élément de cerclage (6) par moulage :
- on injecte ledit deuxième matériau (600) dans le moule (7) avec une pression d'une valeur prédéterminée, au moins par essai, et,
- on maintient cette pression pendant un temps également prédéterminé, au moins par essai, et ce, de manière à précontraindre le deuxième matériau (600) injecté et générer sur les différentes parties (303, 304, 305, 306) de la cage (3) des contraintes radiales qui vont s'additionner aux contraintes engendrées par le retrait dudit deuxième matériau (600).

3. Procédé selon la revendication 1 ou 2, **caractérisé en ce que** lors de la constitution de l'élément de cerclage (6) par moulage, on utilise le deuxième matériau (600) injecté dans le moule (7) pour assurer une liaison mécanique entre le palier (1) et un organe (4) de support du palier (1) que l'on a préalablement positionné dans le moule (7).

4. Procédé selon l'une quelconque des revendications 1 à 3, **caractérisé en ce que** lors d'une phase préparatoire (10), on constitue la sphère (2) dans un troisième matériau (200) consistant en du métal et on choisit comme premier matériau (300) un polymère.

5. Procédé selon l'une quelconque des revendications 1 à 4, **caractérisé en ce qu'**au cours de la première phase (20) du procédé, on constitue le deuxième élément (3) dit "cage" par moulage, en deux parties (303, 304) symétriques assemblables selon un premier plan de joint (307) qui contient l'axe longitudinal (204) de l'anneau sphérique qui constitue la sphère (3).

6. Procédé selon l'une quelconque des revendications 1 à 4, **caractérisé en ce qu'**au cours de la première phase (20) du procédé, on constitue le deuxième élément (3) dit "cage" par moulage, en deux parties (305, 306) symétriques assemblables selon un deuxième plan de joint (308) qui est orthogonal à l'axe longitudinal (204) de l'anneau sphérique qui constitue la sphère (3).

## Claims

1. Method of manufacture of a bearing (1) of type referred to as spherically seated, having notably
- a first element (2) which, of partially spherical shape and designated by the term "sphere", has at least two functional surfaces (201, 202), namely
• an external surface, referred to as first surface (201), defining a spherical ring delimited between two opposite faces (202, 203) substantially orthogonal to the axis (204) of the ring,
- a second element (3) which, of annular shape and designated by the term "cage", has at least two functional surfaces (301, 302), namely
• an external surface, referred to as third surface (301), substantially rotationally cylindrical, intended to allow a mechanical connection with a support element (4) of the bearing (1),
• an internal surface, referred to as fourth surface (302), intended to co-operate with the first surface (201) of said first element (2), radial play (5) of a first predetermined value (51) being foreseen between said first surface (201) and fourth surface (302),
according to this method for manufacturing the bearing (1), after having formed the first element (2) referred to as "sphere":
- in the course of a first phase (20), the second element (3), referred to as "cage" is formed by moulding of a first material (300), and this at least in two assembled parts (303, 304, 305, 306) along at least one joint face (307, 308) chosen to allow the positioning of said parts on the sphere (2), and this with radial play (5) of a second predetermined value (52),
- in the course of a second phase (30), the different parts (303, 304, 305, 306) of the cage (3) are assembled on the sphere (2) in such a way that they are in operational position, and, after assembly
- in the course of a third phase (40), formed around the different parts (303, 304, 305, 306) of the cage (3) is a third element (6), designated by the term binding, to hold said different parts (303, 304, 305, 306) by exerting on the latter radial actions ("R") oriented toward the geometric centre (206) of the sphere (2), and, the intensity of these radial actions ("R") is adjusted in such a way as to modify, through deformation of the cage, the radial play (5) and adjust this play to make it pass from the second predetermined value (52) to the first predetermined value (51),
this method being **characterised in that**, to constitute the third element, referred to as binding element (6):
- a second material (600) of type mouldable by injection is chosen, then
- the coefficient of shrinkage (601) of said second material is determined (600), at least by trial, then
- as a function of said of shrinkage (601), the second value (52) of radial play (5) is determined, at least by trial, in such a way that after moulding of the binding element (6), the latter applies to the cage (3) radial actions which deform it in controlled manner and which, by modifying the radial play (5), thus adjust the radial play (5) to the first predetermined value (51), then
- a mould is formed (7) defining a cavity around those of the parts (303, 304, 305, 306) of which the cage (3) must be constituted, and after having positioned in the mould (7) an assembly made up of a sphere (2) and a cage (3), then
- the binding element (6) is formed by moulding of said second material (600) around the different parts (303, 304, 305, 306) of the cage (3) in order to hold elastically said different parts (303, 304, 305, 306) of the cage (3), and, upon solidification of the second material (600), owing to contraction of the second material (600), to impose upon these parts of the cage (3) the radial stresses which are going to allow adjustment of the radial play (5) with respect to the first value (51).

2. Method according to claim 1, **characterised in that** when making the binding element (6) by moulding:
- said second material (600) is injected into the mould (7) with a pressure of a value, predetermined at least by trial, and,
- this pressure is maintained for a period of time, likewise predetermined at least by trial, in such a way as to prestress the injected second material (600) and to generate on the different parts (303, 304, 305, 306) of the cage (3) radial stresses which are going to be added to the stresses resulting from the contraction of said second material (600).

3. Method according to claim 1 or 2, **characterised in that** when forming the binding element (6) by moulding, the second material (600) is used, injected in the mould (7), to ensure a mechanical connection between the bearing (1) and a support element (4) of the bearing (1) which has been positioned beforehand in the mould (7).

4. Method according to any one of the claims 1 to 3, **characterised in that** during a preparatory phase (10), the sphere (2) is constituted in a third material (200) comprising metal, and a polymer is selected as first material (300).

5. Method according to any one of the claims1 to 4, **characterised in that** in the course of the first phase (20) of the method, the second element (3), referred to as "cage" is formed by moulding, in two symmetrical parts (303, 304) assembled along a first joint face (307) containing the longitudinal axis (204) of the spherical ring which constitutes the sphere (3).

6. Method according to any one of the claims1 to 4, **characterised in that** in the course of the first phase (20) of the method, the second element (3), referred to as "cage", is formed by moulding, in two symmetrical parts (305, 306) assembled along a second joint face (308) which is orthogonal to the longitudinal axis (204) of the spherical ring which constitutes the sphere (3).

## Patentansprüche

1. Herstellungsverfahren eines Gelenks (1) der Art mit Kugeln, umfassend insbesondere:
- ein erstes Element (2), das eine teilweise sphärische Form aufweist und mit dem Ausdruck "Sphäre" bezeichnet wird, das mindestens zwei funktionelle Oberflächen (201, 202) umfasst, davon
- eine äußere Oberfläche, genannt erste Oberfläche (201), die einen sphärischen Ring definiert, der zwischen zwei gegenüberliegenden Seiten (202, 203) begrenzt ist, die im Wesentlichen rechtwinklig zur Achse (204) des Rings liegen,
- ein zweites Element (3), das eine Ringform aufweist und mit dem Ausdruck "Gehäuse" bezeichnet wird, das mindestens zwei funktionelle Oberflächen (301, 302) umfasst, wovon
- eine externe Oberfläche, genannt dritte Oberfläche (301), die im Wesentlichen eine zylindrische Drehung aufweist und dazu vorgesehen ist, eine mechanische Verbindung mit einem Organ (4) zum Tragen des Gelenks (1) zu ermöglichen,
- eine interne Oberfläche, genannt vierte Oberfläche (302), die dazu vorgesehen ist, mit der ersten Oberfläche (201) des ersten Elements (2) zusammenzuarbeiten, wobei ein Radialspiel (5) mit einem ersten vorbestimmten Wert (51) zwischen der ersten Oberfläche (201) und der vierten Oberfläche (302) vorgesehen ist,
gemäß diesem Verfahren, um das Gelenk (1) herzustellen, nachdem das erste Element (2), genannt "Sphäre", gebildet wurde:
- wird im Laufe einer ersten Phase (20) das zweite Element (3), genannt "Gehäuse" durch Formen eines ersten Materials (300) gebildet, und dies mindestens in zwei montierbaren Teilen (303, 304, 305, 306) entlang mindestens einer Trennebene (307, 308), die gewählt wird, um die Positionierung der Teile auf der Sphäre (2) zu ermöglichen, und dies mit einem Radialspiel (5) mit einem zweiten vorbestimmten Wert (52),
- werden im Laufe einer zweiten Phase (30) die verschiedenen Teile (303, 304, 305, 306) des Gehäuses (3) auf der Sphäre (2) so montiert, dass sie sich in einer Betriebsposition befinden und, nach der Montage,
- wird im Laufe einer dritten Phase (40) um verschiedene Teile (303, 304, 305, 306) des Gehäuses (3) ein drittes Element (6) gebildet, das mit dem Ausdruck Umreifung bezeichnet wird, um die verschiedenen Teile (303, 304, 305, 306) beizubehalten, indem auf letztere radiale Kräfte ("R") ausgeübt werden, die auf den geometrischen Mittelpunkt (206) der Sphäre (2) ausgerichtet sind, und die Intensität dieser radialen Kräfte ("R") wird so eingestellt, dass durch Verformung des Gehäuses das Radialspiel (5) geändert und dieses Spiel eingestellt wird, um es vom zweiten vorbestimmten Wert (52) zum ersten vorbestimmten Wert (51) übergehen zu lassen.
wobei dieses Verfahren **dadurch gekennzeichnet ist dass**, um das dritte Element, genannt Umreifungselement (6), zu bilden:
- ein zweites Material (600) desjenigen Typs, der durch Injektion formbar ist, gewählt wird, dann
- mindestens durch einen Versuch der Rückzugskoeffizient (601) des zweiten Materials (600) festgestellt wird, dann
- je nach dem Rückzugskoeffizienten (601) mindestens durch einen Versuch der zweite Wert (52) des Radialspiels (5) festgelegt wird, so dass nach dem Formen des Umreifungselements (6) letzteres auf das Gehäuse (3) radiale Kräfte ausübt, die es auf kontrollierte Weise verformen, und die, indem sie das Radialspiel (5) verändern, so das Radialspiel (5) auf den ersten vorbestimmten Wert (51) einstellen, dann
- eine Form (7) festgelegt wird, die einen Hohlraum um diejenigen der Teile (303, 304, 305, 306) definiert, von denen das Gehäuse (3) gebildet werden muss, und nachdem in der Form (7) eine Gruppe positioniert wurde, die aus einer Sphäre (2) und einem Gehäuse (3) gebildet ist, dann
- das Umreifungselement (6) durch Formen des zweiten Materials (600) um verschiedene Teile (303, 304, 305, 306) des Gehäuses (3) gebildet wird, um die verschiedenen Teile (303, 304, 305, 306) des Gehäuses elastisch zu halten und, bei der Erstarrung des zweiten Materials (600) aufgrund des Rückzugs des zweiten Materials (600) diesen Teilen des Gehäuses (3) die radialen Spannungen aufzuerlegen, die es ermöglichen, das Radialspiel (5) auf den ersten Wert (51) einzustellen.

2. Verfahren nach Anspruch 1, **dadurch gekennzeichnet, dass** bei der Bildung des Umreifungselementes (6) durch Formen:
- das zweite Material (600) in die Form (7) mit einem Druck mit einem vorbestimmten Wert mindestens durch einen Versuch injiziert wird, und
- dieser Druck während einer ebenfalls vorbestimmten Zeit mindestens durch einen Versuch beibehalten wird, und dies so, um das zweite injizierte Material (600) vorzuspannen und auf den verschiedenen Teilen (303, 304, 305, 306) des Gehäuses (3) radiale Spannungen zu erzeugen, die zu den Spannungen hinzugefügt werden, die durch den Rückzug des zweiten Materials (600) erzeugt wurden.

3. Verfahren nach Anspruch 1 oder 2, **dadurch gekennzeichnet, dass** bei der Bildung des Umreifungselementes (6) durch Formung das zweite Material (600), das in die Form (7) injiziert wurde, verwendet wird, um eine mechanische Verbindung zwischen dem Gelenk (1) und einem Organ (4) zum Tragen des Gelenks (1), das zuvor in der Form (7) positioniert wurde, sicherzustellen.

4. Verfahren nach einem der Ansprüche 1 bis 3, **dadurch gekennzeichnet, dass** während einer vorbereitenden Phase (10) die Sphäre (2) in einem dritten Material (200) gebildet wird, das Metall umfasst, und wobei als erstes Material (300) ein Polymer gewählt wird.

5. Verfahren nach einem der Ansprüche 1 bis 4, **dadurch gekennzeichnet, dass** im Laufe der ersten Phase (20) des Verfahrens das zweite Element (3), genannt "Gehäuse", durch Formen in zwei symmetrischen Teilen (303, 304) gebildet wird, die entlang einer ersten Trennebene (307) montiert werden können, die die Längsachse (204) des sphärischen Rings umfasst, der die Sphäre (3) bildet.

6. Verfahren nach einem der Ansprüche 1 bis 4, **dadurch gekennzeichnet, dass** im Laufe der ersten Phase (20) des Verfahrens das zweite Element (3), genannt "Gehäuse", durch Formen in zwei symmetrische Teile (305, 306) gebildet wird, die entlang einer zweiten Trennebene (308) montiert werden können, die rechtwinklig zur Längsachse (204) des sphärischen Rings ist, der die Sphäre (3) bildet.
